# EUROPEAN PATENT APPLICATION

(11) **EP 4 636 979 A1**
(43) Date of publication of application: **22.10.2025**
(21) Application number: 23833204.3
(22) Date of filing: 06.12.2023
(51) Int. Cl.: H02J 7/00, B60R 16/033

(54) **PROCESSING DEVICE FOR POWER SOURCE MANAGEMENT SYSTEM, PROCESSING METHOD, AND POWER SOURCE MANAGEMENET SYSTEM**

(30) Priority: 14.12.2022 JP 2022199261
(71) Applicant: Robert Bosch GmbH, 70442 Stuttgart (DE)
(72) Inventor: DUMITRU, Traian, Yokohama-shi, Kanagawa 224-8501 (JP); BURTON, Edward, Clayton, Victoria 3168 (AU)
(74) Representative: Isarpatent
(86) International application number: PCT/IB2023/062300
(87) International publication number: WO 2024/134337

(57) **Abstract**

To resolve a low state of charge of an on-board battery.

A processing device (40) includes a charge state monitoring section (41) configured to monitor a charge level of an on-board battery (60) that supplies electric power to an electronic device (70, 80) provided to a vehicle (100), a connection verification section (42) configured to verify a connection between an external device (10) and a universal serial bus (USB) port (20) having an interface supporting dual-role power (DRP) that can operate as either a charger side or a receiver side, and a current switching section (46) configured to switch, in accordance with the charge level, a direction of current flow to any one of: a direction in which the external device (10) is charged; and a direction in which electric power is received from the external device (10).

## Description

### Technical Field

The present invention relates to a processing device and a processing method for a power supply management system which can charge an on-board battery in a simple method in a case where the charge level of the on-board battery is low, and also relates to the power supply management system including the processing device.

### Background Art

A quick charging device exclusive to vehicles has conventionally been used which converts AC power to DC power to supply electric power to an on-board battery.

Such a quick charging device is provided with a temperature sensor for detecting the temperature of a charger cable. This allows a user to get information, in advance, about the approximate time necessary for the cable to be cooled from a high temperature to a predetermined low temperature at which the next charge is possible after the completion of quick charge by the previous user (refer to PTL 1, for example).

### Citation List

### Patent Literature

PTL 1: JP2022-150748A

### Summary of Invention

### Technical Problem

However, such a quick charging device involves a power converter as well as special cable and connector for connection to a vehicle, which makes the equipment on a large scale and limits the installation location of the quick charging device.

On the other hand, in a vehicle having an internal combustion engine, once the engine is started, an on-board battery can be charged through a generator such as an alternator. Therefore, even if the on-board battery is in a low state of charge, charging the on-board battery to the extent that the engine can be started would resolve the low state of charge of the on-board battery.

The invention has been achieved in light of such a problem, and therefore, an object of the invention is to provide a processing device and a processing method for a power supply management system which can resolve a low state of charge of an on-board battery in a simple method, and to provide the power supply management system including the processing device.

### Solution to Problem

A processing device according to the invention includes a charge state monitoring section configured to monitor a charge level of an on-board battery that supplies electric power to an electronic device provided to a vehicle, a connection verification section configured to verify a connection between an external device and a universal serial bus (USB) port having an interface supporting dual-role power (DRP) that can operate as either a charger side or a receiver side, and a current switching section configured to switch, in accordance with the charge level, a direction of current flow to any one of: a direction in which the external device is charged; and a direction in which electric power is received from the external device.

Further, a power supply management system according to the invention includes the processing device, a USB port, an electric power transmission device configured to control charging/discharging of an on-board battery based on a command from the processing device, the on-board battery, and an electronic device.

Further, a processing method according to the invention includes a monitoring step for monitoring a charge level of an on-board battery that supplies electric power to an electronic device provided to a vehicle, a verification step for verifying a connection between an external device and a universal serial bus (USB) port having an interface supporting dual-role power (DRP) that can operate as either a charger side or a receiver side, a determination step for determining whether the charge level is greater than a predetermined level, and a switching step for switching, in accordance with a result of the determination step, a direction of current flow to any one of: a direction in which the external device is charged; and a direction in which electric power is received from the external device.

### Advantageous Effects of Invention

In the processing device, the power supply management system, and the processing method according to the invention, the USB port supporting the DRP provided to the vehicle can be used to charge the on-board battery or to supply electric power to the electronic device provided to the vehicle.

This allows a user to resolve a low state of charge of the on-board battery without taking the trouble to move the vehicle to a location where a quick charging device is available.

### Brief Description of Drawings

Fig. 1 is a diagram illustrating how a power supply management system according to a first embodiment of the invention is mounted to a motorcycle.
Fig. 2 is a diagram illustrating the configuration of a system of the power supply management system according to the first embodiment of the invention.
Fig. 3 is a diagram illustrating an operation flow of a processing device of the power supply management system according to the first embodiment of the invention.
Fig. 4 is a diagram illustrating an operation flow of a processing device of a power supply management system according to a second embodiment of the invention.
Fig. 5 is a diagram illustrating an operation flow of a processing device of a power supply management system according to a third embodiment of the invention.
Fig. 6 is a diagram illustrating an operation flow of a processing device of a power supply management system according to a fourth embodiment of the invention. Description of Embodiments

Hereinafter, a description is given of a processing device, a power supply management system, and a processing method according to the invention with reference to the drawings.

The configuration, operation, and so on described below are examples, and the processing device, the power supply management system, and the processing method according to the invention are not limited to the configuration, operation, and so on.

For example, a case in which a vehicle is a motorcycle is described below; however, the vehicle is not limited to a straddle-type vehicle such as a motorcycle, and the vehicle may be any vehicle that has an on-board battery, for example, may be a motorized three-wheeled vehicle or a motorized four-wheeled vehicle.

Further, in the following description, identical or similar descriptions are simplified or omitted as appropriate. In the drawings, identical or similar parts are given the same reference sign. Detailed structures are simplified or omitted from the drawings as appropriate.

### First Embodiment

A power supply management system according to the first embodiment is described below.

### <Configuration of power supply management system>

The configuration of a power supply management system 1 of the first embodiment is described.

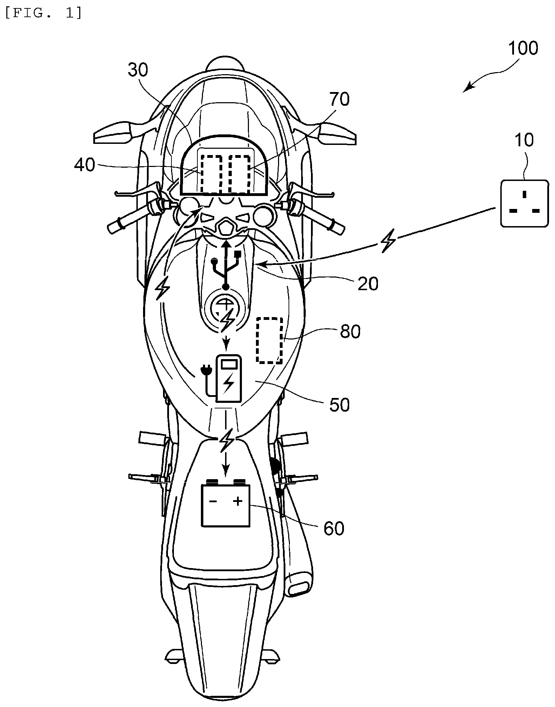

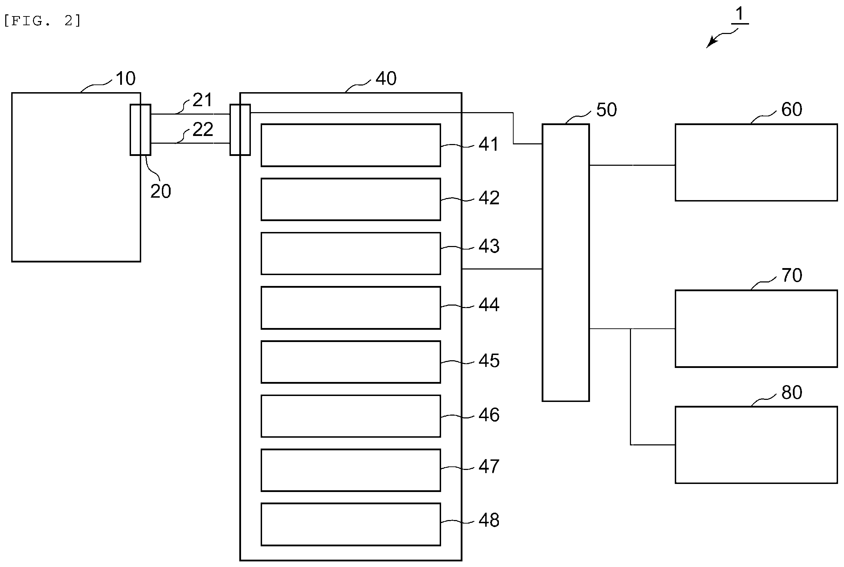

Fig. 1 is a diagram illustrating how the power supply management system according to the first embodiment of the invention is mounted to a motorcycle. Fig. 2 is a diagram illustrating the configuration of a system of the power supply management system according to the first embodiment of the invention.

As illustrated in Fig. 1 and Fig. 2, the power supply management system 1 includes, as the principal elements, a USB port 20, a processing device 40, an electric power transmission device 50, an on-board battery 60, and electronic devices 70 and 80 all of which are mounted to a motorcycle 100.

The USB port 20 is a port having a USB Type-C interface. The USB port 20 connects an external device 10 and the electric power transmission device 50 to each other via a power supply line 21. The USB port 20 also connects the external device 10 and the processing device 40 to each other via a communication line 22. Hereinafter, the power supply line and the communication line are collectively referred to as a USB cable.

The electric power transmission device 50 corresponds to a charge/discharge control circuit that controls charging/discharging of the on-board battery 60 in accordance with a command given from the processing device 40. To be specific, the electric power transmission device 50 is configured to selectively perform a charging operation of storing electric power supplied from the external device 10 in the on-board battery 60, a power feeding operation of delivering electric power supplied from the external device 10 to the electronic devices 70 and 80, and a discharging operation of supplying the electric power stored in the on-board battery 60 to the external device 10.

The on-board battery 60 is a storage battery that is configured for charging/discharging and serves to supply electric power to the electronic devices 70 and 80. The on-board battery 60 may be, for example, a lithium-ion secondary battery, a lithium-ion polymer secondary battery, a nickel-metal hydride rechargeable battery, a lead storage battery, and so on.

The processing device 40 provides a USB port supporting dual-role power (DRP) that can operate as either a charger side (source) or a receiver side (sink) in accordance with the USB Type-C standard. In other words, the processing device 40 functions as the DRP to manage communication as well as the charging and power feeding operation with the other end of the connection via the USB cable.

In the example of Fig. 1, the processing device 40 is disposed in an instrument cluster panel 30 that is mounted to the motorcycle 100 and is provided with various types of meters. More specific configuration of the processing device 40 is detailed later.

The electronic devices 70 and 80 execute various functions in the vehicle by receiving electric power supplied from the on-board battery 60.

The electronic device 70 is a keyless entry device for example, and controls locking and unlocking of the vehicle. In the case of a motorcycle, the electronic device 70 controls locking and unlocking of handlebars. In the case of a four-wheeled vehicle, the electronic device 70 controls locking and unlocking of the vehicle doors.

The electronic device 80 is an engine management device for example, and controls the starting of an engine and fuel injection.

The external device 10 is a device that functions as an electric power supply source from which electric power to charge the on-board battery 60 can be supplied and is connectable to a connector having a USB Type-C interface. Specifically, the external device 10 is a portable charger with USB Type-C connectivity or a mobile terminal having a USB Type-C interface.

Further, the external device 10 is not only a portable and mobile charger or mobile terminal, but also may be a household electrical outlet connected via a USB Type-C interface.

The description goes on to the details of the processing device 40 with reference to Fig. 2. The processing device 40 mainly includes a charge state monitoring section 41, a connection verification section 42, a determination section 43, an instruction section 44, a selection section 45, a current switching section 46, a communication section 47, and a storage section 48. The individual sections of the processing device 40 may be collectively provided in one casing, or, alternatively, may be separately provided in a plurality of casings. Further, a part or the whole of the processing device 40 may be implemented by, for example, a microcomputer, a microprocessor unit, or the like, or may be implemented by a firmware or the like that can be updated, or yet alternatively, a program module or the like that can be executed in accordance with a command given by a CPU or the like.

The charge state monitoring section 41 monitors the state of charge of the on-board battery 60. Specifically, the charge state monitoring section 41 acquires a measurement result of the charge level of the on-board battery 60 via a LAN in the vehicle, and causes the storage section 48 to store the value. A configuration is possible in which the charge state monitoring section 41 monitors the state of charge of the on-board battery 60 at regular intervals. Another configuration is possible in which the charge state monitoring section 41 acquires a measurement result of the charge level every time the connection verification section 42 verifies a connection to the external device 10.

The connection verification section 42 verifies a connection to the external device 10 via the USB port 20. Specifically, when a connection from the external device 10 is made via the USB port 20, the connection verification section 42 verifies that the external device 10 and the processing device 40 are connected to each other. In verifying the connection, it is possible to determine whether the power supply capacity of the external device 10 has power output sufficient to charge the on-board battery 60.

The determination section 43 reads out, from the storage section 48, the charge level of the on-board battery 60 acquired by the charge state monitoring section 41, and determines whether the charge level of the on-board battery 60 is greater than a predetermined threshold Th_01 indicating a low state of charge of the on-board battery 60, whether the charge level of the on-board battery 60 is in a full state of charge, and so on. The threshold Th_01 may be set at, for example, a charge level necessary to start an internal combustion engine. Alternatively, the threshold Th_01 may be set at a level sufficient to unlock the vehicle with the keyless entry device.

The instruction section 44 generates a command to determine a direction of current flow in accordance with user input. Specifically, the user can provide instructions, via an input interface, on whether the direction of current flow is set to a direction in which the external device 10 is charged or a direction in which electric power is received from the external device 10. The input interface may be, for example, a touch panel (not illustrated) of the instrument cluster panel 30. Alternatively, in a case where the external device 10 is a mobile terminal, the input interface may be provided to an operating panel (not illustrated) of the mobile terminal.

The selection section 45 generates a command to select whether the electric power from the external device 10 is to be delivered to the on-board battery 60 or the electronic devices 70 and 80 in accordance with user input. As with the instruction section 44, the input interface for the user may be provided to the touch panel (not illustrated) of the instrument cluster panel 30 or the operating panel (not illustrated) of the mobile terminal.

The current switching section 46 generates a command to control the direction of current flow to be executed by the electric power transmission device 50, reflecting at least one of the determination result by the determination section 43, the instructions by the instruction section 44, and the selection by the selection section 45.

Specifically, the current switching section 46 determines whether the control of the direction of current flow to be executed by the electric power transmission device 50 is a direction of current flow from the external device 10 toward the on-board battery 60, a direction of current flow from the external device 10 toward the electronic devices 70 and 80, or a direction of current flow from the on-board battery 60 toward the external device 10, and generates a command to switch the direction of current flow.

The communication section 47 transmits the command generated by the current switching section 46 to the electric power transmission device 50. The transmission to the electric power transmission device 50 is made via the LAN in the vehicle.

The storage section 48 temporarily stores the measurement results measured by the individual functional sections, the commands generated by the individual functional sections, the determination results by the individual functional sections, and so on.

### <Operation of power supply management system>

The operation of the power supply management system according to the first embodiment is described.

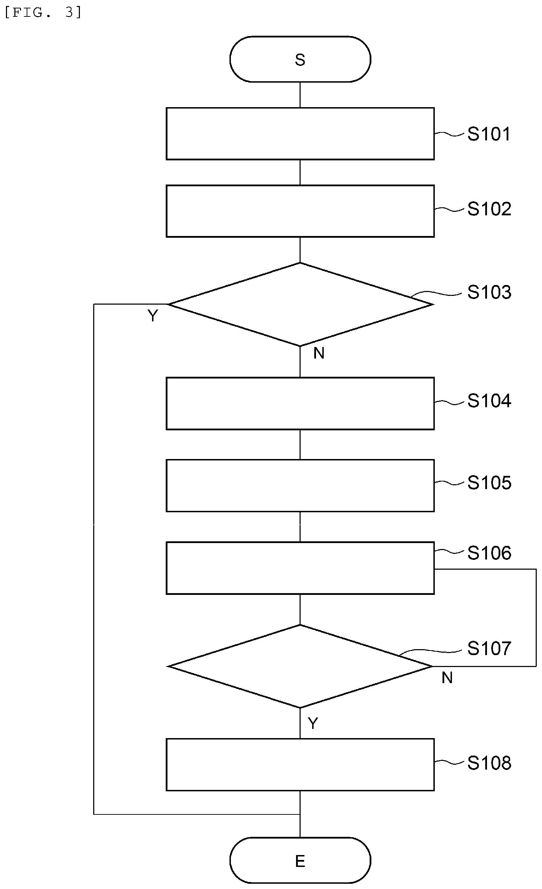

Fig. 3 is a diagram illustrating an operation flow of the processing device of the power supply management system according to the first embodiment of the invention.

The processing device 40 executes the operation flow illustrated in Fig. 3.

### (Monitoring step)

In Step S101, the charge state monitoring section 41 checks the charge level of the on-board battery 60.

### (Verification step)

In Step S102, the connection verification section 42 verifies whether the processing device 40 and the external device 10 are connected to each other via the USB port 20.

### (Determination step)

In Step S103, the determination section 43 compares the charge level of the on-board battery 60 measured in Step S101 with the predetermined threshold Th_01 to determine whether the measured charge level is greater than the threshold Th_01. If the charge level is greater than the threshold Th_01 (Y), then the processing ends. If the charge level is not greater than the threshold Th_01 (N), namely, if the charge level is smaller than the threshold Th_01, then the processing proceeds to Step S104.

### (Switching step)

If the charge level of the on-board battery 60 is determined not to be greater than the threshold Th_01 in Step S103, then the current switching section 46 generates, in Step S104, a command to switch the direction of current flow to a direction in which electric power is received from the external device 10.

### (Communication step)

In Step S105, the communication section 47 transmits the command generated by the current switching section 46 in Step S104 to the electric power transmission device 50.

### (Charging step)

In a case where the communication section 47 transmits the command to the electric power transmission device 50 in Step S105, the electric power transmission device 50 switches, based on the command, the direction of current flow to the direction in which electric power is received from the external device 10 in Step S106. Thereby, charging from the external device 10 to the on-board battery 60 is started.

### (Full charge monitoring step)

In Step S107, the charge state monitoring section 41 checks whether the charge level of the on-board battery 60 is in a full state of charge. If it is not determined that the charge level is in a full state of charge (N), then the processing returns to Step S106 in which the on-board battery 60 continues to be charged. On the other hand, if it is determined that the charge level is in a full state of charge (Y), then the processing proceeds to Step S108.

### (Charging termination step)

If it is determined that the on-board battery 60 is in a full state of charge (Y) in Step S107, then charging the on-board battery 60 is forced to terminate in Step S108. This can protect the on-board battery 60 from being overcharged.

### <Effects of power supply management system>

The description goes on to effects of the power supply management system according to the first embodiment.

A processing device of the power supply management system includes a charge state monitoring section configured to monitor a charge level of an on-board battery that supplies electric power to an electronic device provided to a vehicle, a connection verification section configured to verify a connection between an external device and a universal serial bus (USB) port having an interface supporting dual-role power (DRP) that can operate as either a charger side or a receiver side, and a current switching section configured to switch, in accordance with the charge level, a direction of current flow to any one of: a direction in which the external device is charged; and a direction in which electric power is received from the external device.

Therefore, in accordance with the charge level of the on-board battery, it is possible to selectively perform charging from an external device such as a mobile terminal to the on-board battery or charging the external device from the on-board battery.

Further, in a case where the charge level is lower than a predetermined threshold (Th_01), the current switching section switches the direction of current flow to the direction in which electric power is received from the external device. This enables charging the on-board battery to a charge level required to start the internal combustion engine of the vehicle via the external device without moving the vehicle to an installation location of a large-scale charging facility.

Further, in a case where the charge level of the on-board battery is in a full state of charge, charging the on-board battery by the external device is finished. This enables protecting the on-board battery from being overcharged.

### Second Embodiment

A power supply management system according to the second embodiment is described below.

The power supply management system according to the second embodiment differs from the power supply management system according to the first embodiment only in operation flow in Step S107 (full charge monitoring step) and onward of the processing device 40. Descriptions that are duplicative or similar to those for the power supply management system according to the first embodiment are simplified or omitted as appropriate.

### <Operation of power supply management system>

The operation of the power supply management system according to the second embodiment is described.

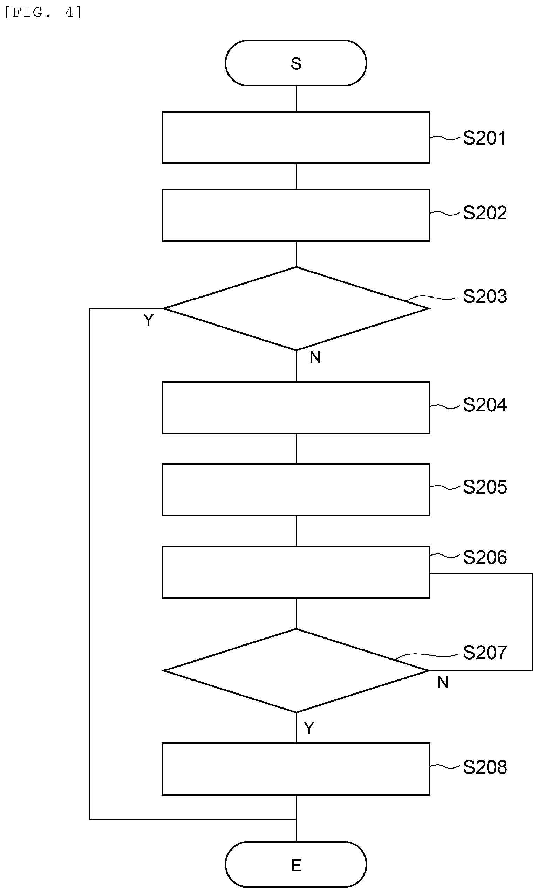

Fig. 4 is a diagram illustrating an operation flow of the processing device of the power supply management system according to the second embodiment of the invention.

The processing device 40 executes the operation flow illustrated in Fig. 4. Since Steps S201 to S206 are common to Steps S101 to S106 in the first embodiment, the description thereof is omitted.

### (Engine start confirmation step)

In Step S206, charging the on-board battery 60 is started, and then, in Step S207, it is determined whether the engine of the vehicle has started. If it is not determined that the engine of the vehicle has started (N), then charging the on-board battery 60 is continued. If it is determined that the engine of the vehicle has started (Y), then the processing proceeds to Step S208. The determination as to whether the engine has started can be made by acquiring a signal from the engine management device.

If it is determined that the engine has started in Step S207 (Y), then the current switching section 46 generates, in Step S208, a command to switch the direction of current flow to a direction in which the external device 10 is charged, and a transmission section transmits the command to the electric power transmission device 50.

### <Effects of power supply management system>

The description goes on to effects of the power supply management system according to the second embodiment.

According to the second embodiment, while the engine of the vehicle does not start, the current switching section switches the direction of current flow to the direction in which electric power is received from the external device, and when the engine of the vehicle starts, the current switching section switches the direction of current flow to the direction in which the external device is charged. Therefore, in a case where the engine of the vehicle starts and the engine works to charge the on-board battery, the direction of current flow can be automatically switched to the direction in which the external device is charged, which improves the convenience of the user.

### Third Embodiment

A power supply management system according to the third embodiment is described below.

The power supply management system according to the third embodiment differs from the power supply management system according to the first embodiment only in operation flow in Step S104 (switching step) and onward of the processing device 40. Descriptions that are duplicative or similar to those for the power supply management system according to the first embodiment are simplified or omitted as appropriate.

### <Operation of power supply management system>

The operation of the power supply management system according to the third embodiment is described.

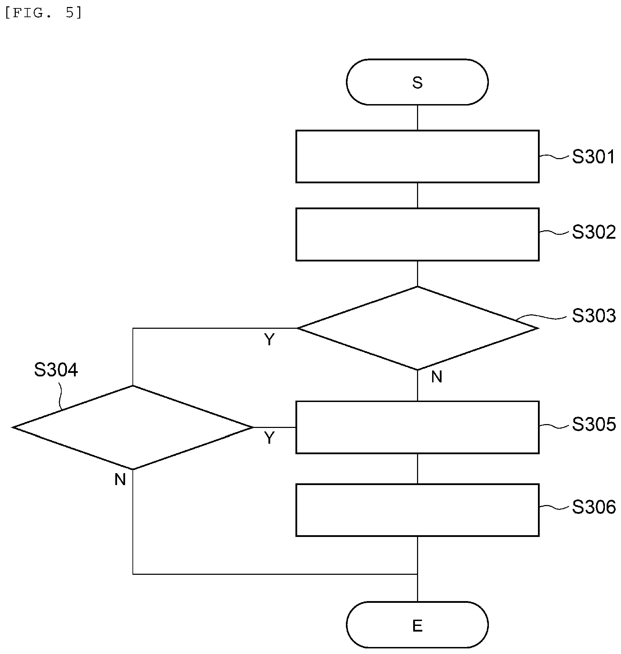

Fig. 5 is a diagram illustrating an operation flow of the processing device of the power supply management system according to the third embodiment of the invention.

The processing device 40 executes the operation flow illustrated in Fig. 5. Since Steps S301 to S303 are common to Steps S101 to S103 in the first embodiment, the description thereof is omitted.

### (Instruction step)

In a case where the measured charge level is greater than the threshold Th_01 in Step 303, the current switching section 46 confirms, in Step S304, whether the command generated by the instruction section 44 indicates that the direction of current flow is the direction in which electric power is received from the external device 10. If the command from the instruction section 44 indicates the direction in which electric power is received from the external device 10 (Y), then the processing proceeds to Step S305. On the other hand, if the command from the instruction section 44 does not indicate the direction in which electric power is received from the external device 10 (N), then the processing ends.

### (Switching step)

If the command from the instruction section 44 indicates the direction in which electric power is received from the external device 10 in Step S304, then the current switching section 46 generates, in Step S305, a command to switch the direction of current flow to the direction in which electric power is received from the external device 10.

### (Communication step)

In Step S306, the communication section 47 transmits the command generated by the current switching section 46 in Step S305 to the electric power transmission device 50.

### <Effects of power supply management system>

The description goes on to effects of the power supply management system according to the third embodiment.

According to the third embodiment, an instruction section is provided which is configured to instruct the direction of current flow in accordance with an operation of a user. Even in a case where the charge level is greater than the predetermined threshold, the current switching section switches the direction of current flow in accordance with an instruction from the instruction section. Therefore, even when the charge level of the on-board battery is in a charge state sufficient to start the internal combustion engine or a charge level sufficient to unlock the vehicle with the keyless entry device, in a case where the charge level of the on-board battery is not a charge level sufficient to operate other on-board devices (for example, on-board lamp, instrument panel, etc.), the user performs an operation to switch the direction of current flow to the direction in which electric power is received from the external device, so that the on-board battery can be charged continuously.

### Fourth embodiment

A power supply management system according to the fourth embodiment is described below.

The power supply management system according to the fourth embodiment differs from the power supply management system according to the first embodiment only in operation flow in Step S104 (switching step) and onward of the processing device 40. Descriptions that are duplicative or similar to those for the power supply management system according to the first embodiment are simplified or omitted as appropriate.

### <Operation of power supply management system>

The operation of the power supply management system according to the fourth embodiment is described.

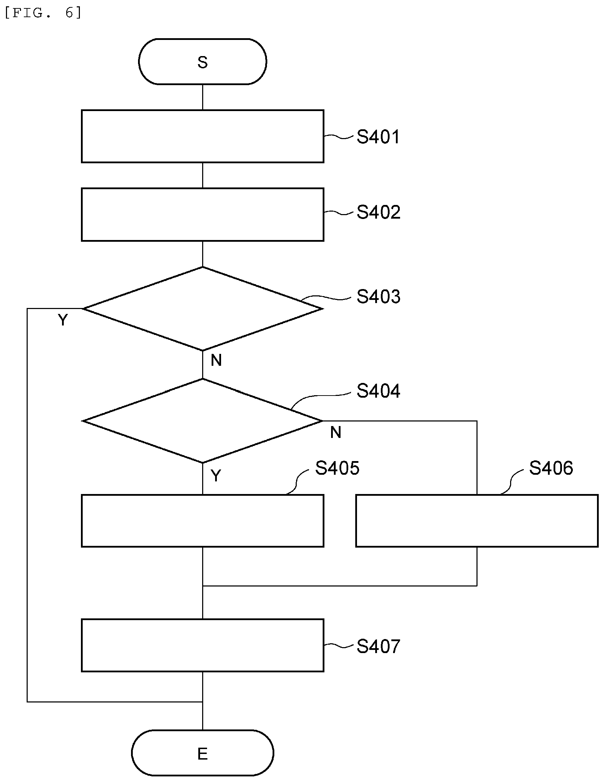

Fig. 6 is a diagram illustrating an operation flow of the processing device of the power supply management system according to the fourth embodiment of the invention.

The processing device 40 executes the operation flow illustrated in Fig. 6. Since Steps S401 to S403 are common to Steps S101 to S103 in the first embodiment, the description thereof is omitted.

### (Selection step)

If the charge level measured is not greater than the threshold Th_01 (N) in Step S403, then it is confirmed, in Step S404, whether the command generated by the selection section 45 indicates the on-board battery 60 or the electronic devices 70 and 80 as the destination to which the electric power is to be delivered. The command generated by the selection section 45 is determined in response to the user operating an input section (not illustrated). If the command from the selection section 45 indicates the on-board battery 60 or the electronic devices 70 and 80 as the electric power delivery destination (Y), then the processing proceeds to Step S405. On the other hand, if no commands are given from the selection section 45 (N), then the processing proceeds to Step S406. In the meantime, if the charge level measured is greater than the threshold Th_01 (Y) in Step S403, then the processing ends.

### (Switching step)

If the command from the selection section 45 indicates the on-board battery 60 or the electronic devices 70 and 80 as the electric power delivery destination (Y) in Step S404, and if the on-board battery 60 is selected as the electric power delivery destination, then the current switching section 46 switches, in Step S405, the direction of current flow to the direction from the external device 10 toward the on-board battery 60. If the command from the selection section 45 indicates the on-board battery 60 or the electronic devices 70 and 80 as the electric power delivery destination (Y) in Step S404, and if the electronic devices 70 and 80 are selected as the electric power delivery destination, then the current switching section 46 generates, in Step S405, a command to switch the direction of current flow to the direction from the external device 10 toward the electronic devices 70 and 80. On the other hand, if no commands are given from the selection section 45 in Step S404, then the current switching section 46 generates a command to switch the direction of current flow to the electric power delivery destination set by default (on-board battery 60, for example) in Step S406.

### (Communication step)

In Step S407, the communication section 47 transmits the command generated by the current switching section 46 in Step S405 or Step S406 to the electric power transmission device 50.

### <Effects of power supply management system>

The description goes on to effects of the power supply management system according to the fourth embodiment.

According to the fourth embodiment, a selection section is provided which is configured to select, by an operation of a user, the on-board battery or the electronic device as a destination to which electric power is to be delivered. In a case where the direction of current flow is the direction in which electric power is received from the external device, electric power is supplied from the external device in accordance with a selection by the selection section. Therefore, in a state where electric power can be fed from the external device, the user can make his/her own decision whether to charge the on-board battery or to feed electric power to the electronic devices from the external device. Specifically, in a case where the user intends to unlock the vehicle simply, he/she can perform an operation to select the keyless entry device as the electric power delivery destination from the external device. Alternatively, in a case where the user intends to start the engine simply, he/she can perform an operation to select the engine management device as the electric power delivery destination from the external device.

The first embodiment, the second embodiment, the third embodiment, and the fourth embodiment have been described above. The invention is not limited to the description of the individual embodiments. For example, only a part of each embodiment may be carried out, and all or a part of each embodiment may be combined. Further, all or some of the steps of the operation flow may be performed in a different order.

For example, Step S106 to Step S108 in the first embodiment may be performed in the second embodiment, the third embodiment, and the fourth embodiment. Further, Step S206 to Step S208 in the second embodiment may be performed in the first embodiment, the third embodiment, and the fourth embodiment.

### Reference Signs List

- 1:: Power supply management system
- 10:: External device
- 20:: USB port
- 21:: Power supply line
- 22:: Communication line
- 40:: Processing device
- 50:: Electric power transmission device
- 60:: On-board battery
- 70, 80:: Electronic device
- 100:: Motorcycle

## Claims

1. A processing device (40) comprising:
a charge state monitoring section (41) configured to monitor a charge level of an on-board battery (60) that supplies electric power to an electronic device (70, 80) provided to a vehicle (100);
a connection verification section (42) configured to verify a connection between an external device (10) and a universal serial bus (USB) port (20) having an interface supporting dual-role power (DRP) that can operate as either a charger side or a receiver side; and
a current switching section (46) configured to switch, in accordance with the charge level, a direction of current flow to any one of: a direction in which the external device (10) is charged; and a direction in which electric power is received from the external device (10).

2. The processing device according to claim **1,** wherein, in a case where the charge level is lower than a predetermined threshold (Th_01), the current switching section (46) switches the direction of current flow to the direction in which electric power is received from the external device (10).

3. The processing device according to claim 2, comprising an instruction section (44) configured to instruct the direction of current flow in accordance with an operation of a user, wherein
even in a case where the charge level is greater than the predetermined threshold, the current switching section switches the direction of current flow in accordance with an instruction from the instruction section.

4. The processing device according to claim 1, wherein, in a case where the direction of current flow is the direction in which electric power is received from the external device (10), the on-board battery (60) is charged with electric power from the external device (10).

5. The processing device according to claim 4, wherein, in a case where the charge level of the on-board battery (60) is in a full state of charge, charging the on-board battery (60) by the external device (10) is finished.

6. The processing device according to claim 1, wherein, in a case where the direction of current flow is the direction in which electric power is received from the external device (10), the electronic device (70, 80) is supplied with electric power from the external device (10).

7. The processing device according to claim 1, comprising a selection section (45) configured to select, by an operation of a user, the on-board battery or the electronic device as a destination to which electric power is to be delivered, wherein
in a case where the direction of current flow is the direction in which electric power is received from the external device (10), electric power is supplied from the external device in accordance with a selection by the selection section (45).

8. The processing device according to claim 7, wherein the electronic device is a keyless entry device that controls locking and unlocking of the vehicle.

9. The processing device according to claim 7, wherein the electronic device is an engine management device that controls starting of an engine of the vehicle.

10. The processing device according to claim 1, wherein the vehicle is a straddle-type vehicle.

11. A power supply management system comprising:
the processing device according to any one of claims 1 to 10;
the USB port;
an electric power transmission device (50) configured to control charging/discharging of the on-board battery (60) based on a command from the processing device;
the on-board battery (60); and
the electronic device (70, 80).

12. A processing method comprising:
a monitoring step (S101, S201, S301) for monitoring a charge level of an on-board battery (60) that supplies electric power to an electronic device (70, 80) provided to a vehicle (100);
a verification step (S102, S202, S302) for verifying a connection between an external device (10) and a universal serial bus (USB) port (20) having an interface supporting dual-role power (DRP) that can operate as either a charger side or a receiver side;
a determination step (S103, S203, S303) for determining whether the charge level is greater than a predetermined level; and
a switching step (S104, S206, S305) for switching, in accordance with a result of the determination step, a direction of current flow to any one of: a direction in which the external device (10) is charged; and a direction in which electric power is received from the external device (10).
